# EUROPEAN PATENT APPLICATION

(11) **EP 1 439 623 A2**
(43) Date of publication of application: **21.07.2004**
(21) Application number: 04290105.8
(22) Date of filing: 15.01.2004
(51) Int. Cl.: H02H 3/06, H02H 3/10, H02H 3/33

(54) **Auto-reset leakage current circuit breaker**

(30) Priority: 15.01.2003 KR 2003001185
(71) Applicant: Seikie E-Tech Co., Ltd., Seoul (KR)
(72) Inventor: Kim, Chul-Woo, Anyang-city, Gyeonggi-do, 430-016 (KR)
(74) Representative: Joly, Jean-Jacques

(57) **Abstract**

The present invention discloses an auto-reset leakage current circuit breaker performing over current cut-off function, leakage current cut-off function, and reset function, and comprising a zero sequence current transformer (220) detecting abnormal current flows generated by ground faults or leakage currents, an abnormal current detector (230) comparing the value of the abnormal current flows, detected by the zero sequence current transformer, with the standard set-point value, a cut-off/reset controller (240) operating a relay switch (250) in the case of the ground faults or the leakage currents, or resetting the relay switch in the case of elimination of the causes of the leakage currents, the relay switch cutting off or resetting an electric path by the order of the cut-off/reset controller, a minute current generator (260) supplying minute currents to check leakage states, until the causes of the leakage current is eliminated, after the relay switch cuts off the electric path, and an auto-reset unit (270) supplying a pulse periodically to check an input signal after the cut-off/reset controller is operated to cut off the abnormal current flows.

## Description

### BACKGROUND OF THE INVENTION

### FIELD OF THE INVENTION

The present invention relates to an auto-reset leakage current circuit breaker having function of an over current limiter cutting off a power supply in the case of over current flows, having function of a leakage current circuit breaker cutting off an electric path automatically in the incidence of ground faults or leakage currents, and resetting these both functions after the elimination of the above causes.

### DESCRIPTION OF THE RELATED ART

Generally, in electric power distribution lines of low voltage, an over current limiter and a leakage current circuit breaker are installed separately and independently. When an over current is flowed in an electric path beyond the standard set-point value, the over current limiter is operated to cut off the power supply to protect electrical machinery and apparatus. In more, when an abnormal current flow is generated by lighting flash to earth, surge or power leakage, the leakage current circuit breaker is operated to cut off the electric path.

However, the abnormal current detector of the present leakage current circuit breaker is generally a zero (phase) sequence current transformer. Generally, the wave shape of the power supply is normal. However, the causes, such as lighting flash to earth, surge or power leakage, makes the wave shape of the power supply abnormal. When the wave shape of the power supply is normal, the zero sequence current transformer does not generate the secondary output. However, when the wave shape is abnormal, the zero sequence current transformer generates the secondary output. The problem is that the present leakage current circuit breaker is operated in the case of not only power leakage but also lighting flash to earth or surge.

In more, after the cause that has operated the leakage current circuit breaker has eliminated, function of the leakage current circuit breaker is not reset to supply the electric power again. Therefore, some one goes to the place where the leakage current circuit breaker is placed, and has to reset function of the leakage current circuit breaker manually.

As a result, it often requires too much effort and time to reset function of the leakage current circuit breaker, when leakage current circuit breakers are installed in mobile telecommunication repeaters or unmanned electric equipment placed in rooftop of buildings or up-country, or street lamps placed in far distance among them.

### SUMMARY OF THE INVENTION

The purpose of the present invention is to provide an auto-reset leakage current circuit breaker performing functions of cutting off over current flows and leakage current flows, and having a compact size installed easily in a narrow space.

The other purpose of the present invention is to provide an auto-reset leakage current circuit breaker resetting it's function again after eliminating the causes, such as lighting flash to earth, surge or power leakage, that have generated abnormal current flows to operate the leakage current circuit breaker.
To overcome the above described problems, preferred embodiments of the present invention provide an auto-reset leakage current circuit breaker performing over current cut-off function, leakage current cut-off function, and reset function, and comprising: a zero sequence current transformer detecting abnormal current flows generated by ground faults or leakage currents; an abnormal current detector comparing the value of the abnormal current flows, detected by the zero sequence current transformer, with the standard set-point value; a cut-off/reset controller operating a relay switch in the case of the ground faults or the leakage currents, or resetting the relay in the case of elimination of the causes of the leakage currents; the relay switch cutting off or resetting an electric path by the order of the cut-off/reset controller; a minute current generator supplying minute currents to check leakage states, until the causes of the leakage current is eliminated, after the relay cuts off the electric path; and an auto-reset unit supplying a pulse periodically to check an input signal after the cut-off/reset controller is operated to cut off the abnormal current flows.

### BRIEF DESCRIPTION OF THE DRAWINGS

For a more complete understanding of the present invention and the advantages thereof, reference is now made to the following descriptions taken in conjunction with the accompanying drawings, in which like reference numerals denote like parts, and in which:
Fig. 1 is a block diagram of an auto-reset leakage current circuit breaker according to the present invention;
Fig. 2 is a detail circuit diagram of the auto-reset leakage current circuit breaker of Fig. 1; and
Fig. 3 is a front view of the auto-reset leakage current circuit breaker of Fig. 1.

### DETAILED DESCRIPTION OF PREFFERED EMBODIMENTS

Reference will now be made in detail to preferred embodiments of the present invention, example of which is illustrated in the accompanying drawings.

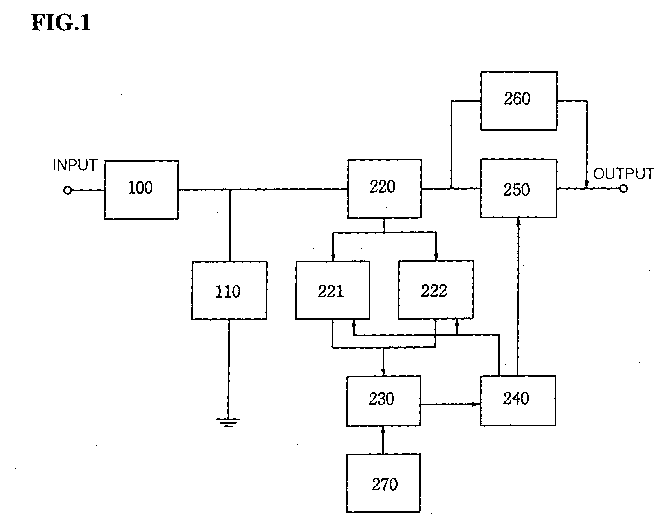

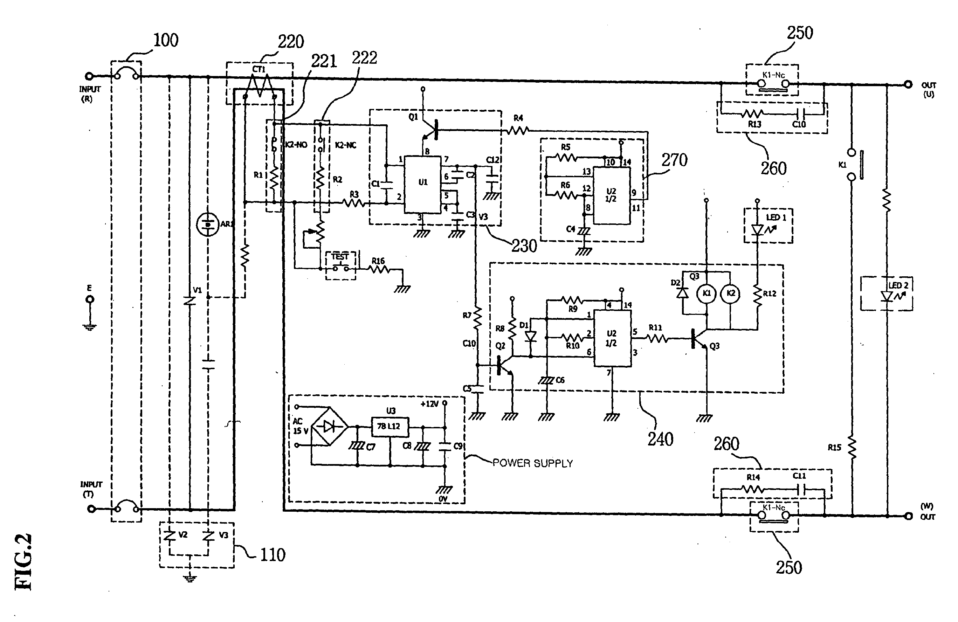

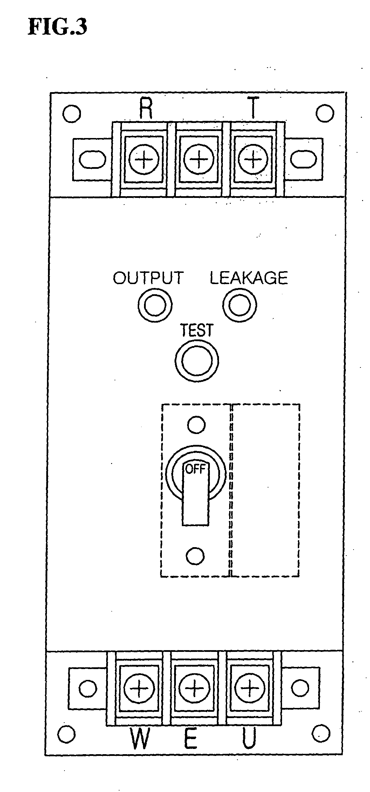

Fig. 1 is a block diagram of an auto-reset leakage current circuit breaker according to the present invention, Fig. 2 is a detail circuit diagram of the auto-reset leakage current circuit breaker of Fig. 1, and Fig. 3 is a front view of the auto-reset leakage current circuit breaker of Fig. 1.

The auto-reset leakage current circuit breaker of the present invention has a compact size with 7 cm in length, 16 cm in width, and 7 cm in thickness approximately shown in Fig. 3, and wires varistors to comprise a surge bypass device 110 bypassing surge, by lighting flash to earth etc, to the ground and an over current limiter 100 cutting off over current flows to protect electrical machinery, apparatus or lines.

In more, the auto-reset leakage current circuit breaker comprises a zero sequence current transformer 220, an abnormal current detector 230, a cut-off/reset controller 240, a relay switch 250, a minute current generator 260, and an auto-reset unit 270. The zero sequence current transformer 220 detects abnormal current flows by ground fault or leakage current flows of electrical machinery or apparatus. The abnormal current detector 230 checks whether the value of the abnormal current flows detected by the zero sequence current transformer 220 are beyond the standard set-point value or not, or checks whether the value of the current flows recovered after eliminating the cause of leakage current flows are below the standard set-point value or not.

Additionally, the cut-off/reset controller 240 operates the relay switch 250 when lighting to flash, surge, or power leakage are happened, or orders a control signal to the relay switch 250 to reset functions of the relay switch 250 after eliminating the cause of power leakage. The relay switch 250 performs function of cutting off or resetting the power supply according to the control signal from the cut-off/reset controller 240. Until eliminating the cause of the interruption after the electric current flow is cut off by the relay switch 250, the minute current generator 260 supplies a minute electric current to recognize leakage states. After the leakage current flows are cut off by occurrence of the abnormal current flows, the auto-reset unit 270 supplies pulses periodically to make the abnormal current detector 230 compare an input signal with the standard set-point value sequentially.

Preferable operation procedures of the present invention are described in the following statements,

As described in the above statements, it is known publicly that the over current limiter cuts off the power supply to protect electrical machinery or apparatus when over current flows are generated. Therefore, the over current limiter will not be described in detail in this discloser. On the contrary, this discloser will describe function and operation procedures of the auto-reset leakage current circuit breaker cutting off or resetting power supply automatically, when the leakage causes, such as lighting flash to earth, ground faults, or leakage currents, are generated or eliminated.

Fig. 2 illustrates operation procedures of the leakage current circuit breaker connected electrically with the over current limiter. The zero sequence current transformer 220 detects abnormal currents flows generated by the leakage causes, such as lighting flash to earth, ground faults or leakage currents.

When the value of the abnormal current flows, detected by the zero sequence current transformer 220, is lower than the standard set-point value of the abnormal current detector 230 comprising an integrated circuit (IC) U1, a transistor Q1 and condensers C1 to C3 and C12, the leakage current circuit breaker is not operated. However, when the value of the abnormal current flows is higher than the standard set-point value, it will be recognized by the cut-off/reset controller 240, comprising an integrated circuit (IC) U2, transistors Q2 and Q3, diodes D1 and D2, resistances R9 to R12, a condenser C6, and relay coils K1 and K2, connected electrically with the abnormal current detector 230. Sequentially, the cut-off/reset controller 240 operates a cut-off signal input circuit 221

Therefore, in the cut-off signal input circuit 221, a relay switch K2-No connected with the resistance R1 is turned on. Simultaneously, a reset signal input circuit 222 is turned off, and the relay switch 250(K1-Nc) is operated to cut off the electric path. When the electric path is cut off, a light emitting diode LED1 connected with the cut-off/reset controller 240 is turned on, and a light emitting diode LED2 connected with the load end is turned off. Therefore, diodes LED1 and LED2 show that the electric path is cut off and the electric power is not supplied. Accordingly, these diodes make an operator recognize easily whether electric currents flow or not.

In more, when the relay switch 250(K1-Nc) is operated, the minute current generator 260, connected with the relay switch 250(K1-Nc) in parallel and comprising a condenser C10 and a resistance R13, supplies minute currents to the load end continuously to detect the leakage status of the electric path.

On the contrary, when the leakage causes, such as ground faults, are eliminated, the auto-reset unit 270 comprising an integrated circuit (IC) U2, resistances R5 and R6, and a condenser C4 generates a launch signal. Sequentially, the value of the abnormal current detected by the zero sequence current transformer 220 is lower than the standard set-point value in the abnormal current detector 230, the cut-off/reset controller 240 connected with the abnormal current detector 230 resets the function of the relay switch 250 to the original states.

Therefore, the relay switch K2-No of the cut-ff signal input circuit 221 is turned off, the relay switch K2-Nc of the reset signal input circuit 222 is turned on, and the relay switch 250(K1-Nc) is reset. In more, the diode LED1 connected with the cut-ff/reset controller 240 is turned off, and the diode LED2 connected with the load end is turned on. As a result, the diodes LED1 and LED2 show that the electric path have been reset automatically.

As described in the above statements, while the over current limiter protecting electrical machinery and apparatus from over current flows is reset manually like the way of the conventional method, the leakage current circuit breaker cutting off the electric path in the case of abnormal current flows, such as ground faults or leakage currents, is reset automatically in the withdrawal of the causes of the abnormal current flows.

Therefore, to reset the function of the leakage current circuit breaker, the operator of an electrical machinery and apparatus rarely goes to the place where the leakage current circuit breaker is installed. In more, the auto-reset leakage current circuit breaker of the present invention has the over current limiter and the leakage current circuit breaker together in a compact size so that it is easy to be installed even in a narrow space. As a result, it is effective for an operator to manage such electrical machinery and apparatus with the auto-reset leakage current circuit breaker of the present invention.

While the invention has been particularly shown and described with reference to preferred embodiments thereof, it will be understood by those skilled in the art that the foregoing and other changes in form and details may be made therein without departing from the spirit and scope of the invention.

## Claims

1. An auto-reset leakage current circuit breaker performing over current cut-off function, leakage current cut-off function, and reset function, and comprising:
a zero sequence current transformer (220) detecting abnormal current flows generated by ground faults or leakage currents;
an abnormal current detector (230) comparing the value of the abnormal current flows, detected by the zero sequence current transformer, with the standard set-point value;
a cut-off/reset controller (240) operating a relay switch (250) in the case of the ground faults or the leakage currents, or resetting the relay switch in the case of elimination of the causes of the leakage currents;
the relay switch cutting off or resetting an electric path by the order of the cut-off/reset controller;
a minute current generator (260) supplying minute currents to check leakage states, until the causes of the leakage current is eliminated, after the relay switch cuts off the electric path; and
an auto-reset unit (270) supplying a pulse periodically to check an input signal after the cut-off/reset controller is operated to cut off the abnormal current flows.
